# EUROPÄISCHE PATENTSCHRIFT

(11) **EP 1 787 522 B1**
(45) Veröffentlichungstag und Bekanntmachung des Hinweises auf die Patenterteilung: **25.06.2008**
(21) Anmeldenummer: 05025311.1
(22) Anmeldetag: 19.11.2005
(51) Int. Cl.: A23F 3/14, A23F 3/34, A23P 1/02

(54) **Verfahren zur Herstellung eines Aufgussmaterials aus Tee, getrockneten Früchten und/oder getrockneten Kräutern**
Process for the manufacturing of an infusion product from tea, dried fruits and/or dried plants
Procédé de fabrication d'un produit à infuser à base de thé, fruits secs, et/ou plantes séchées

(43) Veröffentlichungstag der Anmeldung: 23.05.2007
(73) Patentinhaber: Hälssen & Lyon GmbH, 20457 Hamburg (DE)
(72) Erfinder: Buchard, Jörn, 21220 Seevetal (DE)
(74) Vertreter: von Eichel-Streiber, Caspar

(56) Entgegenhaltungen:
- WO-A-01/89311
- US-A- 4 459 315
- US-A- 5 895 672
- US-A1- 2003 113 406
- PATENT ABSTRACTS OF JAPAN Bd. 013, Nr. 331 (C-622), 25. Juli 1989 (1989-07-25) & JP 01 108939 A (ITOUEN:KK), 26. April 1989 (1989-04-26)
- PATENT ABSTRACTS OF JAPAN Bd. 011, Nr. 184 (C-427), 12. Juni 1987 (1987-06-12) & JP 62 006633 A (NARA PREF GOV), 13. Januar 1987 (1987-01-13)

## Beschreibung

Die Erfindung betrifft ein Verfahren zur Herstellung eines Aufgussmaterials aus Tee, getrockneten Früchten und/oder getrockneten Kräutern. Sie betrifft ferner eine Aufbrüheinheit enthaltend ein nach einem solchen Verfahren hergestelltes Aufgussmaterial.

Im Sinne dieser Erfindung sind unter Tee die aufbrühbaren Teile der Teepflanze in ihrer unterschiedlichsten Zubereitung zu verstehen, insbesondere als Schwarztee, als grüner Tee oder als Oolong. Ferner fallen sämtliche für die Zubereitung von Aufgussgetränken geeigneten getrockneten Früchte sowie Kräuter unter die möglichen Ausgangsmaterialien zur Durchführung des Verfahrens. Unter getrockneten Kräutern sind hier beispielsweise auch Blätter und teeähnliche Pflanzen, wie beispielsweise Mate oder dgl. zu verstehen.

Die klassische Form der Zubereitung von Aufgussgetränken sieht vor, dass Tee in Form loser Blätter oder grob zerkleinerte getrocknete Früchte bzw. Kräuter, wie z.B. Kamillenblüten, Malve oder dgl., in einem Teesieb oder einem ähnlichen Aufgussbehältnis mit heißem Wasser übergossen wird. Bei dieser Art der Zubereitung von Aufgussgetränken muss der Aufguss über einen längeren Zeitraum ziehen, d.h. ruhen, bevor das Aufgussmaterial aus der aufgebrühten Flüssigkeit entnommen werden kann. Typische Zeiten für dieses "Ziehen" liegen zwischen einer Minute und 10 Minuten.

Eine weitere mögliche Form der Zubereitung eines Aufgussgetränkes besteht darin, vorgepackte sogenannte Teebeutel zu verwenden, in denen besonders fein zerkleinerter Tee, zerkleinerte trockene Früchte oder zerkleinerte trockene Kräuter oder Mischungen daraus enthalten sind. Auch hier wird der vorgefertigte Teebeutel, welcher die Aufgussmaterialien umhüllt von einem Filtermaterial enthält, über einen längeren Zeitraum zum "Ziehen" in dem Aufguss belassen.

In jüngster Zeit entwickelt sich aber parallel zu der fortschreitenden Entwicklung von Kaffeemaschinen, die innerhalb kürzester Zeit tassenportioniert Kaffee liefern können, der Bedarf Aufgussgetränke aus Tee, getrockneten Früchten und/oder getrockneten Kräutern nach einem ähnlichen Verfahren herzustellen. Diesbezüglich wurde beispielsweise in der EP 1 054 610 B1 ein Verfahren zur Herstellung einer Portion eines Teeextraktes beschrieben, wobei in einem aus einem Filtermaterial gebildeten Pad eine Teezubereitung aus 2g bis 10g eines Tees mit einer Teilchengröße von 0,4 bis 0,75 mm enthalten ist.

Es hat sich allerdings herausgestellt, dass das dort angegebene Aufgussmaterial, nämlich zerkleinerter Tee mit der angegebenen Partikelgröße nicht in ausreichender Weise geeignet ist, innerhalb der vergleichsweise kurzen Aufbrühzeiten, die mit derartigen Espresso- oder Kaffeemaschinen realisiert werden, in zufrieden stellendem Umfang Aroma an das Extrakt abzugeben.

Hier soll mit der Erfindung Abhilfe geschaffen werden. Es soll mit anderen Worten ein Verfahren zur Herstellung eines Aufgussmaterials aus Tee, getrockneten Früchten und/oder getrockneten Kräutern angegeben werden, welches die Herstellung eines Aufgussmaterials ermöglicht, das auch bei vergleichsweise kurzem Kontakt mit der heißen Aufgussflüssigkeit eine ausreichende Menge an Aromastoffen freisetzt, um ein schmackhaftes Aufgussgetränk zubereiten zu können. Ferner soll eine für den Einsatz in derartigen schnell aufbrühenden Kaffee- oder Espressomaschinen geeignete Aufbrüheinheit angegeben werden.

Die Aufgabe wird hinsichtlich des Verfahrens gelöst durch ein Verfahren mit den Merkmalen des Anspruches 1. Vorteilhafte Weiterbildungen des Verfahrens sind in den Ansprüchen 2 und 3 angegeben. Eine Lösung der Aufgabe hinsichtlich der Aufbrüheinheit ist schließlich in Anspruch 4 benannt.

Erfindungsgemäß wird zur Herstellung eines Aufgussmaterials aus Tee, getrockneten Früchten und/oder getrockneten Kräutern das Ausgangsmaterial, zunächst zu Partikelgrößen von weniger als 0,5 mm zerkleinert. Vorzugsweise liegen die Partikelgrößen dabei unterhalb 0,4 mm, besonders bevorzugt unterhalb 0,3 mm.

Das so zerkleinerte Ausgangsmaterial wird anschließend in einem Extruder verpresst und zu einem Granulat mit einer Korngröße von 0,8 mm bis 1,5 mm extrudiert. Die Korngröße des extrudierten Granulates wird besonders bevorzugt im Bereich von etwa 1 mm gewählt.

Das erfindungsgemäße Verfahren liefert ein Aufgussmaterial, welches insbesondere für die Verwendung in schnellaufbrühenden Aufbrühmaschinen zur sekundenschnellen Zubereitung eines aromatischen Aufgussgetränkes geeignet ist. Dadurch, dass zunächst das Ausgangsmaterial zu einem sehr feinen Pulver zerkleinert wird (Partikelgrößen von weniger als 0,5 mm) und anschließend wieder mit einem Extruder zu einem Granulat mit einer Korngröße von 0,8 mm bis 1,5 mm extrudiert wird, wird folgendes erreicht: das Granulat ist ausreichend fest, so dass es vor dem Aufbrühen nicht zerfällt und durch das Filtermaterial austreten kann. Bei Kontakt mit der heißen Aufbrühflüssigkeit quellen die Partikel in dem Granulat auf, so dass sie aufgrund der Volumenzunahme vom Filtermaterial zurückgehalten werden. Das Granulat ist allerdings auch ausreichend porös, als dass es von dem heißen Wasser als Aufbrühflüssigkeit durchdrungen werden kann. Hier bildet sich insbesondere eine gegenüber zu einer Partikelgröße von 0,8 bis 1,5 mm "normal" zerkleinertem Ausgangsmaterial erheblich vergrößerte Oberfläche, entlang derer die Aufbrühflüssigkeit mit dem Aufgussmaterial in Kontakt gerät. Hierdurch und durch das Zerfallen des aufgebrühten Granulates wird eine schnelle und aromaintensive Infusion erreicht. Das Extrusionsverfahren ist nämlich so eingestellt, dass das extrudierte Granulat eine hohe Porösität aufweist, was letztlich zu der beschriebenen großen Oberfläche führt, entlang derer das heiße Wasser mit dem Aufgussmaterial in Kontakt gelangen und Aroma- und sonstige Stoffe aufnehmen kann.

Die Verwendung eines Extruders hat ferner den Vorteil, dass dieser sehr reproduzierbar und sauber Granulat der gewünschten Korngröße ausgibt, ohne dass hier wiederum Stäube oder dgl. entstehen und somit letztlich ein abschließender Siebungsprozess nicht mehr erforderlich ist. Die feinen Stäube könnten nämlich nicht für das Abpacken in ein Filtermaterial verwendet werden, da diese durch die Poren des Filtermaterials heraustreten würde.

In einer vorteilhaften Weiterbildung des erfindungsgemäßen Verfahrens wird dem zerkleinerten Ausgangsmaterial vor dem Verpressen oder während des Verpressens in dem Extruder Wasser und/oder Wasserdampf zugegeben. Dies führt zu einem verbesserten "Zusammenkleben" des Materials in dem Granulat, so dass das Granulat insgesamt stabiler ist. Die Menge des zugegebenen Wassers bzw. Wasserdampfes wird dabei so gesteuert, dass ein optimales Ergebnis hinsichtlich der Porösität auf der einen Seite und der Festigkeit auf der anderen Seite des Granulates erreicht wird.

Das Granulat wird in dem Extruder vorzugsweise durch Ablängen von aus dem Extruder austretenden Extrudatsträngen mit einem Durchmesser von 0,8 mm bis 1,5 mm erhalten (Anspruch 3). Hierzu kann am Ende des Extruders ein Schermesser laufen.

Schließlich ist mit der Erfindung eine Aufbrüheinheit angegeben, welche von einem Filtermaterial umschlossen ein wie oben beschrieben hergestelltes Aufgussmaterial enthält. Vorzugsweise weist diese Aufbrüheinheit die Form eines Filterpads auf, so dass es ähnlich wie bereits bekannte, in Kaffeemaschinen zum schnellen Aufbrühen von Portionskaffee (ähnlich der bekannten Philips Senseo®-Maschine) verwendete Kaffeepads genutzt werden kann.

In einem Ausführungsbeispiel wurden in einem Extruder zuvor auf eine Partikelgröße von kleiner als 0,5 mm zerkleinerte Schwarzteeteilchen mit einem Durchsatz von etwa 100 kg pro Stunde in einen Extruder gegeben. An seinem Auslass wies der Extruder eine Blende mit 48 Düsen mit einem kreisförmigen Durchmesser von je 1,4 mm auf. In dem Extruder wurde ein Druck von ca. 150 bis 160 bar eingestellt. Die Temperaturen des Materials in dem Extruder wurden am Auslass des Extruders mit 93-98°C gemessen.

Erhalten wurde ein Granulat mit einer Schüttdichte von 370 bis 410 g pro Liter und einer Feuchte von 9,62%.

Für weitere Versuche ist es Ziel, den Düsendurchmesser auf 1,0 mm zu reduzieren und mit geringeren Drücken im Extruder (Drücke im Bereich 120-130 bar) zu arbeiten. Hierdurch soll erreicht werden, dass die Temperatur des Materials am Ausgang des Extruders auf 75-85°C eingestellt werden kann. Die Schüttdichten des Granulats können dann teilweise bis zu 500g pro Liter liegen.

Dieses Ausführungsbeispiel ist nicht beschränkend und dient lediglich der näheren Erläuterung der Erfindung, wie sie in den anliegenden Ansprüchen definiert ist.

## Patentansprüche

1. Verfahren zur Herstellung eines Aufgussmaterials aus Tee, getrockneten Früchten und/oder getrockneten Kräutern, wobei der Tee, die getrockneten Früchte und/oder getrockneten Kräuter als Ausgangsmaterial zunächst zu Partikelgrößen von weniger als 0,5 mm zerkleinert werden und das so zerkleinerte Ausgangsmaterial anschließend in einem Extruder verpresst und zu einem Granulat mit einer Korngröße von 0,8 mm bis 1,5 mm extrudiert wird.

2. Verfahren nach Anspruch 1, **dadurch gekennzeichnet, dass** dem zerkleinerten Ausgangsmaterial vor dem Verpressen oder während des Verpressens in dem Extruder Wasser und/oder Wasserdampf zugegeben wird.

3. Verfahren nach einem der Ansprüche 1 oder 2, **dadurch gekennzeichnet, dass** das Granulat durch Ablängen von aus dem Extruder austretenden Extrudatsträngen mit einem Durchmesser von 0,8 mm bis 1,5 mm erhalten wird.

4. Aufbrüheinheit **dadurch gekennzeichnet, dass** sie von einem Filtermaterial umschlossen ein nach einem der vorhergehenden Ansprüche hergestelltes Aufgussmaterial enthält.

## Claims

1. Process for producing an infusion material from tea, dried fruits and/or dried plants, the tea, the dried fruits and/or the dried plants as the starting material initially being comminuted to particle sizes of less than 0.5 mm and the thus comminuted starting material is then compressed in an extruder and extruded to a granulate having a particle size of 0.8 to 1.5 mm.

2. Process according to claim 1, **characterized in that** prior to or during compression in the extruder, water and/or steam is added to the comminuted starting material.

3. Process according to one of the claims 1 or 2, **characterized in that** the granulate is obtained with a diameter of 0.8 to 1.5 mm by cutting to length from extrudate strands passing out of the extruder.

4. Boiling up unit, **characterized in that** it is surrounded by a filter material and contains an infusion material produced according to one of the preceding claims.

## Revendications

1. Procédé pour fabriquer un produit à infuser à base de thé, fruits secs et/ou plantes séchées, le thé, les fruits secs et/ou les plantes séchées étant broyés d'abord comme matériau de base pour former des dimensions de particules inférieures à 0,5 mm et le matériau de base ainsi broyé étant ensuite pressé dans une extrudeuse et étant extrudé pour former un granulat avec une grosseur de grain de 0,8 mm à 1,5 mm.

2. Procédé selon la revendication 1, **caractérisé en ce que** de l'eau et/ou de la vapeur d'eau est ajoutée au matériau de base broyé avant ou pendant le pressage dans l'extrudeuse.

3. Procédé selon l'une des revendications 1 ou 2, **caractérisé en ce que** le granulat est obtenu par une mise à la longueur de branches d'extrudat sortant de l'extrudeuse avec un diamètre de 0,8 mm à 1,5 mm.

4. Unité d'infusion, **caractérisé en ce qu'**elle est entourée par un matériau filtrant et contient un produit à infuser fabriqué selon l'une des revendications précédentes.
